(19) **Europäisches Patentamt**

**European Patent Office**

**Office européen des brevets**

(11) **EP 1 409 594 B1**

(12) **EUROPEAN PATENT SPECIFICATION**

(45) Date of publication and mention
of the grant of the patent:
**06.09.2006 Bulletin 2006/36**

(51) Int Cl.:
*C09C 1/36* (2006.01)          *C09D 7/02* (2006.01)
*C09D 7/14* (2006.01)          *C09D 5/02* (2006.01)

(21) Application number: **02756773.4**

(22) Date of filing: **23.07.2002**

(86) International application number:
**PCT/US2002/024046**

(87) International publication number:
**WO 2003/010244 (06.02.2003 Gazette 2003/06)**

(54) **METHOD FOR CONDITIONING TITANIUM DIOXIDE PIGMENTS**

VERFAHREN ZUR AUFBEREITUNG VON TITANDIOXIDPIGMENTEN

PROCEDE DE CONDITIONNEMENT DE PIGMENTS DE DIOXYDE DE TITANE

(84) Designated Contracting States:
**AT BE BG CH CY CZ DE DK EE ES FI FR GB GR
IE IT LI LU MC NL PT SE SK TR**

(30) Priority: **23.07.2001 US 307214 P**

(43) Date of publication of application:
**21.04.2004 Bulletin 2004/17**

(73) Proprietor: **E.I. DUPONT DE NEMOURS AND
COMPANY
Wilmington,
Delaware 19898 (US)**

(72) Inventors:
• **MCINTYRE, Patrick, F.**
 **West Chester, PA 19382 (US)**
• **VISSCHER, Karyn, B.**
 **Voorhees, NJ 08043 (US)**
• **DIEBOLD, Michael, P.**
 **Wilmington, DE 19809 (US)**
• **SULLIVAN, Brian, W.**
 **Wilmington, DE 19809 (US)**

(74) Representative: **Morf, Jan Stefan
Patentanwälte Abitz und Partner
Postfach 86 01 09
81628 München (DE)**

(56) References cited:
 **EP-A- 0 549 163          EP-A- 1 070 739
 US-A- 3 542 575          US-A- 4 997 870
 US-A- 5 705 033**

**Description**

## BACKGROUND OF THE INVENTION

This invention relates to methods of conditioning titanium dioxide pigments with one or more acrylic copolymer dispersants during pigment manufacture and to conditioned titanium dioxide products produced by such methods.

Crude titanium dioxide materials obtained after chemical synthesis are generally unsuitable for use as pigments in end use applications. Consequently, the crude materials typically undergo one or more finishing steps that modify particle size, particle shape, surface characteristics, and/or crystal structure of the pigment in such a way that provides a pigment of good pigmentary quality. In most finishing processes, one or more of the finishing steps include some type of milling or grinding to achieve the desired particle size reduction and distribution. Most finishing processes also include various surface treatments and additives to make the titanium dioxide pigments easier to process and to improve durability. Crude titanium dioxide having undergone a pigment finishing process are called finished or conditioned pigments and are typically sold commercially.

A current process for finishing crude titanium dioxide pigments involves the steps of dispersing the crude material in an aqueous medium; followed by various inorganic and organic surface treatments; and once the desired coating is formed on the surface, the pigment is filtered and washed; and then dried; before being ground to a desired size using, e.g., a fluid energy mill, and isolated as finished pigment. The dry, agglomerated conditioned titanium dioxide nowadays, however, requires subsequent, i.e., downstream, milling with various additives, e.g., solvent, resin, dispersants, etc., as for example, as taught in DeColibus U.S. Pat. No. 4,177,081 issued Dec. 4, 1979 or Bauer et al. U.S. Pat. No. 5,989,331 issued Nov. 23, 1999, to disperse the pigment and achieve an acceptable product for various end use applications, such as coatings, inks, plastics, paper, and textile products, etc.

Subsequent milling of the conditioned pigment, however, is time-consuming and expensive. Minimizing or preventing pigment agglomeration that occurs during traditional finishing would result in substantial savings in milling time and expense, as the pigment would be easily dispersed under relatively gentle conditions and little or no milling would be required.

Therefore, there is still a need to improve the finishing process for titanium dioxide pigments, and in particular to find new methods for preparing conditioned titanium dioxide pigments that minimize or prevent agglomeration and make the pigment more readily dispersible in various end use applications.

Copolymer dispersants are known in the art and have been used to disperse conventionally conditioned titanium oxide pigments during subsequent milling operations to form a slurry or liquid dispersion. The so formed pigmented slurries or liquid dispersions are then combined with other components (such as binder resins, curatives, and other additives) to form paints and other materials. Although polymeric dispersing agents have been used to disperse finished titanium dioxide pigments, very little is known about the use of copolymer dispersants during processes of finishing crude titanium dioxide materials prior to their isolation as dry, finished powders.

## SUMMARY OF THE INVENTION

The present invention provides an improved method for preparing conditioned titanium dioxide pigments, which comprises mixing together crude titanium oxide pigment with one or more acrylic polymer dispersants during pigment manufacture and isolating the conditioned pigment as dry powder. In certain embodiments, the inventive method avoids the need for subsequent milling or grinding of the so produced pigment product, which removes a major processing step in various end use applications. The present invention also provides a novel titanium dioxide material produced by the inventive method which exhibits improved dispersibility, especially in water-based applications such as water-based paints, printing inks, and paper products.

The inventive method preferably comprises:

(a) after chemical synthesis, admixing the following components to form a conditioned titanium dioxide pigment:

(1) a crude titanium dioxide material;
(2) at least about 0.1 % by weight, relative to the crude titanium dioxide, of one or more acrylic copolymer dispersants (preferably water-dispersible acrylic copolymer dispersants containing at least one polymerized monomer containing an acid, phosphate or amine group in the pigment adsorbing segment); and,
(3) an optional processing liquid in which the titanium dioxide pigment is substantially insoluble (preferably water);

(b) followed by isolating the conditioned titanium dioxide pigment as dry powder.

The admixture may also include one or more of the following:

(4) one or more processing aids; and/or

(5) one or more additional surface treatment additives.

Upon completion of the admixing, one or more of the following may be added to flocculate the conditioned pigment prior to isolation:

(6) one or more acids; and/or

(7) one or more bases.

All pigments produced from the methods of the present invention are highly dispersible and provide desired performance properties, such as gloss, color, hiding, etc; in wet and/or dried enduse systems. As indicated above, in certain embodiments, the pigments produced from the processes of the present invention can be incorporated directly in enduse applications (as stir-in pigments) without requiring subsequent milling and/or without having to separately form slurries or liquid dispersions as is done with conventional pigment.

The term "crude titanium dioxide pigment" as used herein refers to a titanium dioxide pigment that has not been treated using the process of the present invention. Such crude pigments may or may not be modified after chemical synthesis and may or may not have desirable coloristic properties in enduse systems.

The term "conditioned titanium dioxide pigment" as used herein refers to a titanium dioxide pigment that is modified by the process of the present invention after chemical synthesis.

## BRIEF DESCRIPTION OF THE DRAWING

FIG. 1 is a general flow diagram of the method of this invention used to make conditioned titanium dioxide pigments.

FIG. 2 is schematic diagram showing one type of apparatus that can be used to perform the method of this invention.

## DETAILED DESCRIPTION OF THE INVENTION

Methods of the present invention require admixing a crude titanium dioxide pigment with one or more acrylic copolymer dispersants, optional processing liquid, and optionally one or more additives, followed by isolation. The components of the admixture may be added or combined in any order such that preferably (but not necessarily) all are present at the start of the inventive method. The admixture is processed in such a way to enable deposition of the copolymer dispersant onto the particle surfaces of the titanium dioxide material.

Suitable processing methods include known wet milling (or grinding) methods, such as sand milling, bead milling, fluid energy milling, disc milling, and the like; known drying methods, such as spray drying, fluidized bed drying, tray drying, spin flash drying, and the like; and other known deposition for particulate materials, such as injector treating, 2-roll dry milling, and the like. These processing methods are either encountered during the various stages of a conventional crude pigment finishing operation or provided as an additional step in a finishing operation. The conditioned pigments that result contain individual particles or loosely bound aggregates that are more readily dispersible in various enduse applications.

Crude Titanium Dioxide Pigments

Generally any type of crude titanium dioxide material can be processed in accordance with the inventive method. However, the starting pigments processed herein are preferably crude dry, rutile titanium dioxide materials which have been formed from titanium tetrachloride using a vapor phase oxidation process commonly known as the chloride process. Typically, these materials also contain small amounts of oxidized rutilizing agents, such as alumina, which are coproduced along with the titanium dioxide during the chloride process. This invention is not limited to titanium dioxide made using chloride process and could be applied to either rutile or anatase grades made using sulfate process.

The crude titanium dioxide material processed in accordance with the inventive method is also preferably a pigmentary titanium dioxide material. Pigmentary titanium dioxide materials are characterized by crystal sizes in the range of from about 0.1 to about 0.5 micron. The pigmentary titanium dioxide material will preferably have a crystal size of about 0.2 micron.

Transparent titanium dioxide materials which are characterized by crystal sizes less than 0.1 micron in size can also be used as the starting pigments. Typically, transparent titanium dioxides even after conventional finishing are agglomerated materials and exhibit poor dispersibility and coloristic properties. The method of the present invention can be used to convert such agglomerated pigments to readily dispersible forms.

The crude pigments processed in accordance with the inventive method may or may not be modified after chemical synthesis and may or may not have desirable coloristic properties, such as gloss, tint strength, hiding, etc; in enduse applications. Typical modifications include inorganic hydrous oxide (e.g., alumina and/or silica) after treatments.

The method of the present invention converts any such starting pigments into stir-in pigments which exhibit excellent dispersibility in various enduse applications. <u>Copolymer Dispersants</u>

Conditioned titanium dioxide pigments are prepared by the methods of the present invention by processing mixtures containing crude titanium dioxide pigments and one or more acrylic copolymer dispersants. The total concentration of the copolymer dispersants is at least about 0.1 percent by weight (typically 0.1 to 100 percent by weight, preferably 0.25 to 5 percent by weight, more preferably 0.5 to 1 percent by weight) relative to the crude titanium dioxide pigment. While the amount of copolymer dispersant used in this invention can vary widely depending upon the particular dispersant compositions employed, the particular pigmentary grades of titanium dioxide pigment, and the desired degree of dispersibility in the various enduse applications, the copolymer dispersant(s) should generally be used in amounts sufficient to adequately coat the surface of the pigment particles. The copolymer dispersants can be introduced during various stages of a conventional crude pigment finishing operation or after the final stage of the conventional finishing operation but still during pigment manufacture, as described hereinafter.

The copolymer dispersants that are used are preferably water-dispersible polymers and hence compatible with aqueous processing conditions generally encountered during crude titanium dioxide pigment finishing and are a acrylic copolymer dispersants. Such copolymers include at least one pigment adsorbing segment and at least one stabilizing segment. Not to be held to any particular theory, it is thought that the adsorbing segments function, in part, to attach the copolymer dispersant to a pigment's surface, while the stabilizing segments function, in part, to maintain dispersion stability of the pigment in a liquid.

The adsorbing segments of water-dispersible acrylic copolymer are hydrophobic, in comparison to the stabilizing segment, and are designed to adhere to the pigment surface, while the stabilizing segments are generally hydrophilic and are soluble in the aqueous processing medium.

The hydrophobic adsorbing segment is preferably composed of polymerized ethylenically unsaturated hydrophobic monomers as are listed hereinafter, and also contains (preferably up to about 40% by weight, based on the total weight of the adsorbing segment) of polymerized ethylenically unsaturated monomers having functional groups that enhance the pigment binding force. For example, monomers with acid groups may be incorporated in the hydrophobic portion to bind with basic groups on the titanium dioxide pigment surface. Monomers with phosphate groups may also be used because of their natural affinity for the complex titanium dioxide surface. Monomers with amine groups may also be incorporated in the hydrophobic portion to bind with acid groups that may also be present on the titanium dioxide surface. Other monomers that have known affinity to titanium dioxide, such as monomers with silane groups, etc., can also be used.

Suitable hydrophobic monomers that can be used to form the hydrophobic adsorbing segment include but are not limited to alkyl (meth)acrylates having 1-12 carbon atoms in the alkyl group (such as methyl acrylate, ethyl acrylate, propyl acrylate, isopropyl acrylate, butyl acrylate, pentyl acrylate, hexyl acrylate, 2-ethylhexyl acrylate, isopropyl acrylate, butyl acrylate, pentyl acrylate, hexyl acrylate, 2-ethylhexyl acrylate, nonyl acrylate, lauryl acrylate, methyl methacrylate, ethyl methacrylate, propyl methacrylate, isopropyl methacrylate, butyl methacrylate, pentyl methacrylate, hexyl methacrylate, 2-ethylhexyl methacrylate, nonyl methacrylate, lauryl methacrylate, and the like, and any mixtures thereof.). Cycloaliphatic (meth)acrylates can also be used (such as trimethylcyclohexyl methacrylate, isobutylcyclohexyl methacrylate, and the like). Aromatic (meth)acrylates can also be used (such as benzyl (meth)acrylate, napthyl (meth)acrylate, phenoxy (meth)acrylate, and the like), and mixtures thereof Other polymerizable monomers that can be used are styrene, alpha methyl styrene, (meth)acrylamide and (meth)acrylonitrile monomers.

Suitable monomers with acid groups that can be incorporated into the hydrophobic adsorbing segment to enhance the pigment binding force include ethylenically unsaturated carboxylic acids (such as acrylic acid and methacrylic acid). Methacrylic acid is preferred particularly if it is the sole acid constituent. Other carboxylic acids that can be used include maleic acid, and the like. Ethylenically unsaturated sulfonic, sulfinic, phosphoric or phosphonic acid and esters thereof also can be used (such as styrene sulfonic acid, 2-acrylamido-2-propane sulfonic acid, vinyl phosphonic acid and its esters, and the like).

Suitable monomers with phosphate groups that can also be used to enhance the pigment binding force include ethylenically unsaturated phosphate monomers (such as phosphorylated polyethylene glycol (meth)acrylate, phosphorylated hydroxy ethyl (meth)acrylate, and the like) or ethylenically unsaturated monomers containing alcohol groups (such as hydroxy alkyl (meth)acrylate) or epoxy groups (such as glycidyl (meth)acrylate) which are treated with one or more phosphorylating agents (such as phosphoric acid or phosphorous pentoxide) before or after polymerization to form phosphate groups where the epoxy or alcohol groups used to be.

Suitable monomers with amine groups include alkylaminoalkyl methacrylate monomers having 1 to 4 carbon atoms in the alkyl group (such as dimethylaminoethyl methacrylate, diethylaminoethyl methacrylate, dipropylaminoethyl methacrylate, dibutylaminoethyl methacrylate) and the like.

As indicated above, the stabilizing segment is preferably soluble in the selected aqueous processing medium encountered during crude pigment finishing, and is therefore primarily composed of polymerized ethylenically unsaturated hydrophilic monomers. Suitable hydrophilic monomers that can be used to form the stabilizing segment include monomers with acid groups (such as acrylic acid, methacrylic acid, 2-acrylamido-2-propane sulfonic acid, and the like, as listed hereinabove). The salts of these monomers can also be used to aid in dispersing the copolymer in the selected aqueous processing medium. Such salts can be formed by the addition of an amine (such as 2-amino methyl propanol) or an inorganic base (such as ammonium hydroxide or sodium hydroxide) to the polymer dispersant after it has been formed. Non-ionic hydrophilic monomers that can also be used to form the stabilizing segment include poly(ethylene glycol) alkyl ethers having 1 to 4 carbon atoms in the alkyl group (such as poly(ethylene glycol) methyl ether oligomers supplied under the trade name Bisomer S20W by International Specialty Chemicals, ISC, and the like and poly(alkoxylated) alkyl (meth)acrylates, and the like.

In addition to the forgoing monomers, other commonly used hydrophobic monomers can be copolymerized into the stabilizing portion provided they are used at a concentration that will not drastically change the solubility properties of the stabilizing portion in the selected aqueous processing medium. Some useful examples include the alkyl (meth) acrylates and other hydrophobic monomers listed hereinabove.

Either or both the stabilizing segment or the adsorbing segment, preferably the stabilizing segment, may also contain ethylenically unsaturated hydrophilic monomers with crosslinkable groups, such as hydroxy groups, that will react with film forming components present in certain enduse applications, such as in water-based paints. These reactive monomers enable the copolymer dispersant to become a permanent part of the final film network in reactive systems and prevent deterioration of the film upon weathering as may occur if it were an unreacted component of the film. Suitable monomers for crosslinking purposes include hydroxy alkyl(meth)acrylate monomers having 1-4 carbon atoms in the alkyl group (such as hydroxy ethyl acrylate, hydroxy ethyl methacrylate, and the like). Depending on the polymerization process, these monomers along with the acid monomers may have to be blocked with silane during polymerization to prevent side reactions and then unblocked by a reaction with alcohol or water, as is well known in the art.

The acrylic copolymer dispersants useful herein generally have a number average molecular weight of about 1,000 to about 25,000 (preferably about 2,000 to about 10,000). An adsorbing segment has a number average molecular weight of about 1,000 to about 10,000 (preferably about 1,000 to about 5,000). A stabilizing segment has a number average molecular weight of about 1,000 to about 15,000 (preferably about 1,000 to about 5,000).

The location of the adsorbing segment and the stabilizing segment in the acrylic polymer dispersant may vary depending upon the structure of the acrylic copolymer dispersant. Acrylic polymer dispersants used in the present invention may be random or structured copolymers, such as block or graft copolymers, with block or graft copolymers being preferred.

A block copolymer of the present invention may have an AB, ABA, or ABC structure, for example. At least one of the blocks, A, B or C must be an adsorbing segment. At least one of the blocks, A, B or C must be a stabilizing segment.

Graft copolymer dispersants used in the present invention have a backbone segment and a side chain segment. Either a backbone segment or a side chain segment must be an adsorbing segment. Either a backbone segment or a side chain segment must be a stabilizing segment. Preferably a backbone segment is an adsorbing segment and a side chain segment is a stabilizing segment.

Random copolymer dispersants used in the present invention have both adsorbing segments and stabilizing segments randomly distributed in the polymer chain. These dispersants are typically functionalized polyacrylate copolymers with number average molecular weights ranging from 1,000 to 10,000, preferably, 2,000 to about 4,000.

The acrylic copolymer dispersants may be prepared using the Group Transfer Polymerization ("GTP") method reported in U.S. Patent 4,656,226; the anionic polymerization method reported by Morton in Anionic Polymerization: Principles and Practice (New York: Academic Press, 1983); the ring-opening polymerization method as reported in Ring Opening Polymerization, Vol. 1, edited by K. J. Ivin and T. Saegusa (New York: Elsevier applied Science Publishers, 1984), page 461; or the Special Chain Transfer ("SCT") method reported in U.S. Patent 5,231,131, all of which are herein incorporated by reference.

Besides the acrylic copolymer dispersants, the method of this invention can also be used with other commercially available dispersants. Compatible mixtures of any of the aforementioned dispersants can also be used.

The method can also be tailored for solvent borne end use systems using solvent based copolymer dispersants instead.

Processing Liquids

The method of the present invention involves processing a mixture containing crude titanium dioxide pigments, one or more copolymer dispersants, and an optional (but preferable) processing liquid. The processing liquid, if present, acts as a liquid carrier medium for the dispersant and facilitates deposition of the dispersant resin onto the pigment particle surface. The processing liquid is preferably a solvent for the dispersant resin and non-solvent for the titanium dioxide material. It can be supplied by the pigment in the form of a slurry, the dispersant in solution, or may be separately added. In any event, sufficient amounts of processing liquid should be used to enable the dispersant to effectively deposit onto the titanium dioxide surface during processing operations. The processing liquid, when used, typically comprises about 10 to 50% by weight (preferably 20 to 30% by weight) of the mixture being processed.

Suitable processing liquids include water, lower aliphatic alcohols (such as methanol), ketones and ketoalcohols (such as acetone, methyl ethyl ketone, and diacetone alcohol), amides (such as dimethylformamide and dimethylacetamide), ethers (such as tetrahydrofuran and dioxane), alkylene glycols and triols (such as ethylene glycol and glycerol), and other organic liquids known in the art; and mixtures thereof. Other liquids can be used but are generally less preferred. The preferred processing liquid is water, which may or may not be supplied from the crude pigment finishing operation.

Processing Aids

Processing aids may also be added in conventional quantities (e.g., 0.1% to 50% by weight relative to the pigment) to the mixture. Examples of suitable processing aids include surfactants, wetting agents, grinding aids, latices, or mixtures thereof. In certain cases, amine or inorganic bases may be added, especially if the acrylic copolymer dispersant (s) contain acidic functional groups, to aid in dispersing the polymer in the processing liquid.

Surface Treatment Additives

Before, during or after processing, the titanium dioxide pigment may be treated with one or more inorganic and/or organic surface treatment additives. Suitable inorganic surface treatment additives include metal salts (such as sodium aluminates, sodium silicates, or mixtures thereof). Suitable organic surface treatment additives include non-polymeric materials such as trimethylol propane or triethylene acetate, and the like. Such additives can be incorporated in amounts ranging from about 0.1 to 20 percent by weight (preferably 0.1 to 5 percent by weight) relative to the pigment.

Flocculants

Upon completion of the admixing step, acids may be added to the resulting mixture to promote flocculation (and thereby facilitate isolation) as well as to improve the binding of the acrylic polymer to the pigment surface, particularly for acrylic polymers having acid groups. Suitable such acids include dilute mineral acids (such as hydrochloric, sulfuric, phosphoric, or mixtures thereof) and organic acids (such as acetic, formic or mixtures thereof). Bases, such as those mentioned above, may sometimes be used to flocculate the processed pigment to aid in isolation depending on the surface characteristics of the pigment at the time of flocculation.

Conditioning Methods

Admixing can be carried out by any known method that will deposit copolymer dispersant onto the surface of the crude titanium dioxide pigment. In the present invention, these admixing methods can be encountered during various stages of a conventional finishing operation or after conventional finishing is complete but still preferably during pigment manufacture.

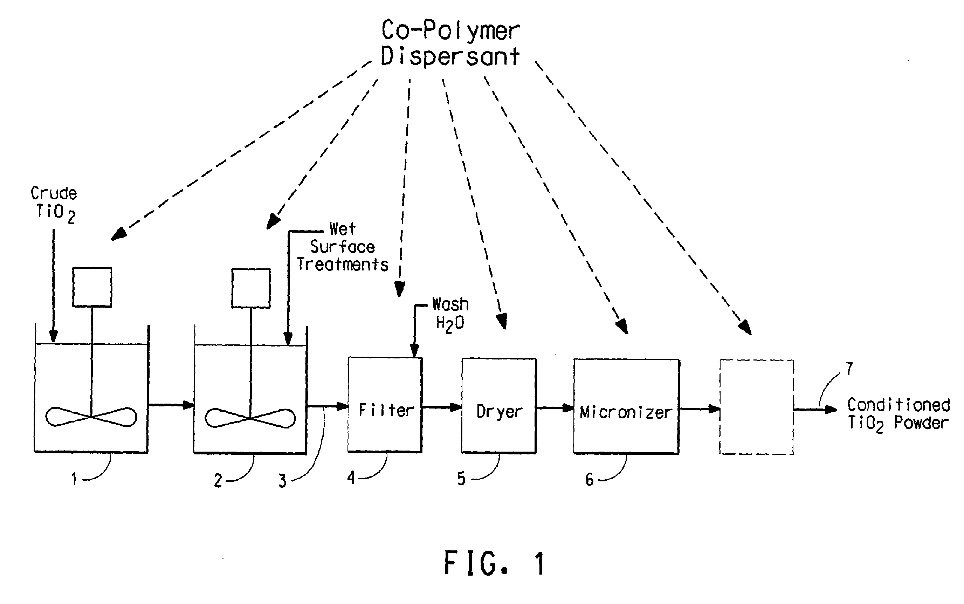

Referring now to the FIG. 1, a number of stages during a conventional crude pigment finishing process are shown (as indicated by arrows) where copolymer dispersant deposition can occur.

As shown in the FIG. 1, in a conventional finishing operation, the crude dry, agglomerated titanium dioxide starting material that is obtained from the last step of a reaction process, e.g., vapor phase oxidation of titanium tetrachloride, is typically processed by:

1. dispersing the crude material in an aqueous medium;
2. precipitating inorganic oxides (e.g., alumina and/or silica) on the particle surfaces of the dispersed titanium dioxide material with the addition of a neutralizing agent (this step is optional);
3. recovering the treated titanium dioxide material by filtering;
4. washing and filtering the recovered product to remove salts and impurities therefrom using, e.g., deionized water and rotary vacuum-type filters, respectively;
5. drying the washed product using, e.g., a spray dryer;
6. grinding (i.e, micronizing) the dried product to a desired size using, e.g., a fluid (steam) energy mill; and,
7. isolating the finished pigment as dry powder.

Non-polymeric organic surface treatment additives are also typically introduced during dispersing or during wash and filtering or during or after drying to make the pigment easier to grind.

In accordance with the present invention, copolymer dispersant can be introduced before, during or after one of the conventional finishing operations. Copolymer deposition can occur, for example, during the dispersing step 1, the surface treatment step 2, the washing and filtering step 4, the drying step 5, and during the grinding step 6, as indicated by arrows in the FIG. 1. Such conditioning of the crude titanium dioxide material with copolymer dispersant is desirable as it does not add an extra step to a conventional finishing process.

Yet another way to introduce the copolymer dispersant is to add an extra finishing step to the finishing operation, such as a final after-treatment step, as shown in phantom in the FIG. 1. This final after-treatment step may entail taking dry pigment from the grinding step and then depositing the copolymer dispersant thereon using, e.g., an injector treatment process, as described below. It also may entail reslurrying the dry pigment in aqueous medium and then despositing the copolymer dispersant thereon using, e.g., a spray dryer. As will be appreciated by those skilled in the art, a number of other final after-treatment processes may be used to deposit copolymer dispersant onto the titanium dioxide pigment, before isolating the pigment as a conditioned dry powder.

As indicated above, a final after-treatment is but just one of the distinct stages during the crude pigment finishing operation where copolymer deposition can occur prior to isolation as conditioned dry powder.

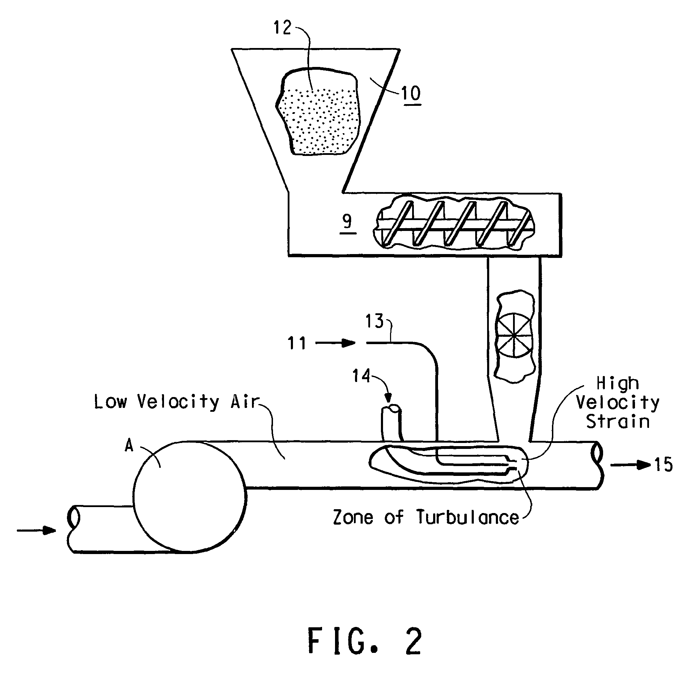

The deposition of copolymer dispersant onto the titanium dioxide particles during this final stage of processing can be, and preferably is, performed using an injector treatment apparatus 10, as shown in FIG. 2. At this stage of processing, the titanium dioxide pigment has already been coated with oxides or other materials, by methods known in the art, filtered and washed free of salts and other impurities, and ground (i.e., micronized) to a desired particle size distribution. As shown in FIG. 2, copolymer dispersant 11 along with particulate pigment 12 is then introduced in the injector treatment apparatus using the procedure which is described in detail in Schurr U.S. Pat. No. 4,430,001 issued Sep. 28, 1981. This injector mixer apparatus 10 is built into the pigment manufacturing process and is a method for uniformly mixing relatively small amounts of materials, such as copolymer dispersant, with a relatively large amount of another material in particulate form, such as titanium dioxide pigment. This is done by introducing the smaller amount of material 11 via a pipe 13 within another concentric pipe 14 through which a high pressure gas (e.g., air or steam) is introduced which thereby provides a zone of turbulence into which a particulate material in larger amounts 12 is introduced, the mixture of gas and materials or resins being transported through a treatment chamber where deposition occurs to produce a uniform mixture which can be isolated as dry powder 15. This procedure for conditioning titanium dioxide pigments is illustrated in the examples provided hereinbelow.

Pigments conditioned according to the present invention are suitable for many different pigment applications. For example, the conditioned pigments can be dried and used as components in various coatings, inks, paper and plastic systems. Conditioned pigments prepared by the processes of the present invention are readily dispersible, especially in water-based systems such as coatings, inks, and paper systems. In certain embodiments, the conditioned pigments can be incorporated directly in these systems without requiring an additional milling step. In other embodiments, the conditioned pigments may be blended with other materials such as a liquid carrier, preservatives, and other additives under gentler conditions before being incorporated in the final application system. Examples of such systems include coating compositions, such as paints, preferably automotive, architectural or industrial paints, electronic coating paints, physically or oxidatively drying lacquers, stoving enamels, reactive paints, two-component paints, solvent- or water-based paints, emulsion paints for weatherproof coatings and distempers, printing inks such as ink jet inks, and paper coatings and products.

The conditioned pigments of the present invention are also suitable for use with macromolecular materials, especially synthetically produced macromolecular materials. Examples include plastic materials, such as polyvinyl chloride, polyvinyl acetate, and polyvinyl propionate, polyolefins, such as polyethylene and polypropylene; high molecular weight polkyamides; polymers and copolymers of acrylates, methacrylates, acrylonitrile, acrylamide, butadiene, or styrene; polyurethanes; and polycarbonates. Other suitable macromolecular substances include those of a natural origin, such as rubber, those obtained by chemical modification, such as acetyl cellulose, cellulose butyrate, or viscose; or those produced synthetically, such as polymers, polyaddition products and polycondensates. Materials containing conditioned pigments of the present invention may have any desired shape or form, including molded articles, films and fibers.

The following examples illustrate the present invention and are not intended to limit either the spirit or scope of the present invention. Those skilled in the art will readily understand that other variations exist. Unless otherwise indicated, all parts and percentages are on a weight basis, and all molecular weights referred to herein are determined by GPC (gel permeation chromatography) using polystyrene as the standard.

## EXAMPLES

Conditioned pigments were prepared by processing mixtures comprising a crude white titanium dioxide pigment, a copolymer dispersant, and a processing liquid, and isolating the conditioned pigments as dry powder. So formed conditioned pigments were then formulated into water-based paint systems which were evaluated for performance. Examples of copolymer dispersants used in the Examples are provided below.

Polymer Dispersant 1

Polymer Dispersant 1 is an acrylic graft copolymer containing acid functionality in its pigment adsorbing backbone prepared using the Special Chain Transfer, SCT, method as described in Chu et al. U.S. Pat. No. 5,231,131 issued Jul. 27, 1993.

Polymer Dispersant 1 was prepared in 3 steps. The first step is the formation of a macromonomer which eventually forms the side chains. The second step is reacting the macromonomer with the backbone constituents to form the macro branched copolymer. The third step is solids reduction with deionized water and neutralization of the acid groups to facilitate dispersion in water.

Step 1. Preparation of Macromonomer I: MMA/MAA (71.2/28.8)

The macromonomer was prepared from the following ingredients.

| Portion 1 | Weight (gram) |
| --- | --- |
| Methyl methacrylate (MMA) | 142.47 |
| Methacrylic acid monomer (MAA) | 38.33 |
| Isopropanol | 222.75 |
| Portion 2 | |
| Isopropyl-bis(borondifluorodimethyl Glyoxim) | 0.01 |
| Isopropanol | 12.73 |
| 2,2-azobis(2,4-dimethylvaleronitrile) (Vazo® 52 by DuPont Co., Wilmington, DE) | 0.17 |
| Methyl ethyl ketone | 9.18 |
| Portion 3 | |
| Isopropanol | 10.68 |
| Portion 4 | |
| Methyl ethyl ketone | 27.54 |
| Isopropanol | 38.19 |
| diaquabis(borondifluorodiphenyl glyoximato) cobaltate (II), Co(DPG-BF$_2$) | 0.03 |
| 2,2'-azobis(2,4-dimethylvaleronitrile) (Vazo® 52 by DuPont Co., Wilmington, DE) | 1.91 |
| Portion 5 | |
| Methyl methacrylate (MMA) | 94.98 |
| Methacrylic acid (MAA) | 57.49 |
| Isopropanol | 100.51 |
| Total | 756.97 |

Portion 1 was charged to a 12-liter flask (equipped with a thermometer, stirrer, addition funnels, heating mantle, reflux condenser, and nitrogen blanket) and heated under a nitrogen blanket to its reflux temperature in about 20 minutes. Portion 2 was added as one shot and the composition was held at its reflux temperature for about 5 minutes. Portion 3 was used as a rinse for the container and lines from Portion 2. Portion 4 and 5 were added simultaneously while the reaction was held at reflux. The addition of Portion 4 took 330 minutes to complete and addition of portion 5 took 240 minutes to complete. After adding Portion 4 and Portion 5, the reaction continued for additional 15 minutes at reflux and then cooled to room temperature. The resulting macromonomer solution had the composition of MMA/MAA (71.2%128.8%). Solvent was stripped off in a vacuum and the macromonomer was used below to form the graft copolymer. The macromonomer had a solids of 38.1%, a weight average molecular weight of 2,000 gm/mole, a number average molecular weight of 4,000 gm/mole and the polydispersity was 2.0.

Step 2. Preparation of Graft Copolymer: [70] NBA/AA/MA (45.5/09/45.5) // [30] MMA / MAA (71/29)

The graft copolymer was formed by charging a reactor equipped as above and the following ingredients were employed.

| Portion 1 | Weight (gram) |
|---|---|
| n-Butyl Acrylate (NBA) | 19.51 |
| Acrylic Acid (AA) | 3.86 |
| Methyl Acrylate (MA) | 19.51 |
| MACROMONOMER I (prepared above) | 369.95 |
| Isopropanol | 7.45 |
| **Portion 2** | |
| Butyl Acetate | 15.34 |
| Benzoyl Peroxide | 0.37 |
| **Portion 3** | |
| Isopropanol | 5.845 |
| **Portion 4** | |
| n-Butyl Acrylate (NBA) | 143.06 |
| Acrylic Acid (AA) | 28.30 |
| Methyl Acrylate (MA) | 143.06 |
| **Portion 5** | |
| Isopropanol | 10.50 |
| **Portion 6** | |
| 2,2'-azobis(2,4-dimethylvaleronitrile) (Vazo® 52 by DuPont Co., Wilmington, DE) | 2.86 |
| Isopropanol | 41.29 |
| Methyl Ethyl Ketone | 10.65 |
| **Portion 7** | |
| Isopropanol | 8.47 |
| Total | 830.00 |

The reactor was inerted with nitrogen. Portion 1 was heated to reflux temperature over a 20 minute period. Portion 2 is the initiator solution and was charged to the reactor in 2 shots with 10 min hold. The reaction was held at reflux for 10 minutes. Portion 3 was rinse for Portion 2. Portion 4 was charged to monomer feed tank, mixed for 15 min, then fed to reactor over 180 minutes. Portion 5 was rinse for portion 4. Portion 6 is charge of initiator and solvents to initiator feed tank with feed to reactor over 240 minutes concurrent with Portion 4. Portion 7 is rinse for Portion 6.

Step 3. Solids Reduction and Neutralization

| Portion 1 | Weight (gram) |
|---|---|
| Deionized Water | 45.19 |
| **Portion 2** | |
| Aminomethyl propanol (AMP® 95 by Angus Chemical) | 6.07 |
| **Portion 3** | |
| Deionized Water | 1.20 |
| **Portion 4** | |
| Polymer Dispersant 1 | 47.54 |
| Total | 100.00 |

Portion 1 was charged to the reactor and agitated. Portion 2 was charged to reactor and mixed for 15 minutes. Portion 3 was rinse for Portion 2. Portion 4 was fed to reactor over 90 min and mixed for 30 min, then fillout. The resulting branched copolymer solution had a 30% solids content and the polymer had the following composition: [70] NBA/AA/MA (45.5/09/45.5) // [30] MMA / MAA (71/29) and a weight average molecular weight of 15,500 and a number average molecular weight of 6,300 and polydispersity of 2.5.

Polymer Dispersant 2

Polymer Dispersant 2 is an example of a nonionic graft polymer containing phosphated functionality in its pigment adsorbing backbone prepared using a standard anionic polymerization process. The resulting phosphated graft copolymer had the following composition:

[60] NBA/MA/GMA-Phosphated (45.5/45.5/9)//[40] Bisomer S20W

The phosphate polymer was prepared using the macromonomer, Bisomer S20W as the stabilizing arms of the graft copolymer. The Bisomer S20W macromonomer, which provides the water soluble functionality to the polymer, are reacted in a vessel along with the backbone constituents to form the macro branched graft copolymer.

The graft copolymer was formed by charging a reactor equipped as above and heating to reflux using the above procedure. To the reactor the monomers of n-butyl acrylate (NBA), glycidyl methacrylate (GMA), methyl acrylate (MA) and the Bisomer 20W macromonomer were added with isopropanol as the solvent. The polymerization reaction was initiated by feeding the initiator 2,2'-azobis(2,4-dimethylvaleronitrile) (Vazo® 52 from DuPont Co., Wilmington, DE) which was dissolved in a solution of methyl ethyl ketone and isopropanol. The phosphating was accomplished by an esterification of the epoxy groups on glycidyl methacrylate with phosphoric acid, $H_3PO_4$.

The resulting phosphate acrylic graft copolymer reached 99% conversion. Its solids was 45 % in a solution of water/isopropanol. The molecular weight of the polymer was obtained using GPC. The polymer was methylated prior to injection into the column. The GPC indicated a number average molecular weight of 4,577 and weighted average molecular weight of 12,060 and polydispersity of 1.64.

Polymer Dispersant 3

Polymer Dispersant 3 is an example of an AB acrylic block copolymer containing amine functionality in the adsorbing segment and prepared using the GTP method.

The AB block copolymer was prepared by charging to a 5-liter flask equipped with an agitator, condenser, heating mantle, nitrogen inlet, thermocouple and an addition port, 1,600g of tetrahydrofuran and 3.8 g of p-xylene, followed by 0.6 mL of a 1.0 M solution of a catalyst, tetrabutylammonium m-chlorobenzoate in acetonitrile. 32.5 g of a 0.140 M solution of an initiator, 1,1-bis(trimethylsiloxy)-2-methylpropene, were injected into the flask. Feed 1, consisting of 0.6 mL of a 1.0 M solution of tetrabutylammonium m-chlorobenzoate in acetonitrile, was started and added over 200 minutes. Feed 2, consisting of 265.0 g (1.67 mol) of trimethylsilyl methacrylate (silane blocked methacrylic acid (blocked MAA)), 298.0 g (2.10 mol) of butyl methacrylate (BMA), 140.0 g (1.40 mol) of methyl methacrylate (MMA), and 141.0 g (0.70 mol) of trimethylsiloxyethyl methacrylate (silane blocked hydroxy ethyl methacrylate (blocked HEMA)), was started at 0.0 minutes and added over a 45 minute period. One hundred minutes after Feed 2 was completed, over 99% of the monomers had reacted. Feed 3, consisting of 616.0 g (3.46 mol) of benzyl methacrylate (BZMA), and 154.0 g (0.98 mol) of dimethyl amino ethyl methacrylate (DMAEMA), was started and added over 30 minutes. After 400 minutes, 150 g methanol was added to the resulting reaction mixture to quench the reaction and deblock the hydroxy and acid monomers and solvent distillation was started. During the first stage of distillation, 400 g of solvent were removed. 100 g of methanol were added and an additional 200 g of solvent was distilled off.

The resulting polymer solution had a solids content of 50% and the polymer had the following composition:

BZMA / DMAEMA // BMA / MMA / HEMA / MAA

in a monomer ratio of 25/7//15/10/5/12. The polymer had a number average molecular weight of 9,400 and a polydispersity of 1.1. The polymer solution was diluted with a 1:1 mixture of deionized water and isopropyl alcohol to a solids content of 30% prior to use.

Pigment Conditioning

The polymer dispersants described above were used in various combinations to make conditioned titanium dioxide pigments for which properties are reported in Table 1. The examples in which copolymer dispersants were applied to pigment during injector treatment are denoted as I.T. Dispersibility of these pigments in water and performance in water-based architectural paints were then evaluated.

Example 1

Injector Treatment Example (I.T.1)

A 2000 gram of crude titanium dioxide (rutile) pigment (Ti-Pure® R-706 by DuPont Co., Wilmington, DE) coated with inorganic oxides, by methods known to the art, filtered and washed to remove ions, then dried and dry ground, was provided. The product was further processed by induction into a fast moving stream of nitrogen gas in an Injector Treatment device shown in FIG. 2 and described U.S. Pat. No. 4,430,001. Using this procedure the smaller amounts of dispersant resin were then intimately mixed into the larger pigment particles. This is accomplished by introducing into the device, concurrent with the pigment induction through the apparatus, a stream of appropriate liquid dispersants which gets incorporated in the induction gas and is provided at a level determined to give the optimum dispersant to pigment ratio. Typically, very low dispersant levels on pigment are required ranging from 0.25 up to 5.0 wt%, with a preferred range of 0.5 to 1.0 wt%, to adequately coat pigmentary grades of $TiO_2$. A peristaltic pump is generally used to feed liquid dispersing resins into the Injector Treator. To achieve adequate and uniform flow the resin solution solids are typically reduced to 20% to 30% with deionized water. These resin solutions have typical Brookfield viscosities ranging from 25 to 200 centipoise, preferably, 50 to 75 centipoise as measured using a #2 spindle at 100 rpm and room temperature. The total liquid dispersant for I.T.1 was 16.6% which at 30% solids corresponds to 5% Polymer Dispersant 1 on pigment. The resulting product was a fine, dry white powder.

As to the device, the Injector Treatment device used in this example was made of 1 inch schedule 40 pipe with an inside diameter of 1.049 inches. The nozzle for injection of induction gas had an inner diameter of 0.368 inches, into which a 0.25 inch outer diameter tube was inserted for injection of dispersing resin solution. The pigment to be treated was screw fed into the device through an attached hopper at a feed rate of 400 to 500 grams per minute. Slower or faster feed rates may be preferable depending on processing conditions and pigment grades. Typically, the fast moving induction (nitrogen) gas should be maintained at the nozzle at pressures ranging from 40 to 100 psig and preferentially 60 to 80 psig. In this example, the nitrogen gas was maintained at 60 psig at the nozzle.

Processing temperatures inside the Injector Treator device are also important to achieve grit free product. Moisture introduced from the resin solution or through use of steam as induction gas can result in pigment agglomerates during drying after the Injector Treatment procedure. Therefore, elevated temperatures at the Injector Inlet and Outlet favor quick evaporation and removal of moisture. Typical injector inlet temperatures range from 275 to 330°C and preferably 300°C. Temperatures measured at the injector outlet that favor low grit are 145°C to 225°C with 160°C as preferred. In this example, the Inject Treator Inlet temperature was 300°C and the Outlet temperatures was 160°C.

Example 2

Injector Treatment Example (I.T.2)

A 2000 gram of crude titanium dioxide (rutile) pigment (Ti-Pure® R-706 by DuPont Co., Wilmington, DE) as above was further processed by induction into a fast moving stream of nitrogen in an Injector Treatment device as described above but using a dispersant resin combination. The total liquid dispersant combination for IT Example 2 was 12.5%. This corresponds to actual dispersant solids of 1.7% Polymer Dispersant 1 and 3.0% solids Polymer Dispersant 2 on pigment. The resulting product was a fine, dry white powder.

Example 3

Injector Treatment Example (I.T.3)

A 1500 gram of crude titanium dioxide (rutile) pigment (Ti-Pure® R-706 by DuPont Co., Wilmington, DE) as above was further processed by induction into a fast moving stream of nitrogen in an Injector Treatment device as described above. The total liquid dispersant combination for IT Example 3 was 16.6%. This corresponds to actual dispersant solids of 2.5% Polymer Dispersant 1 and 2.5% Polymer Dispersant 3 on pigment. The resulting product was a fine, dry white powder.

Example 4

Injector Treatment Example (I.T. 4)

A 5000 gram of crude titanium dioxide (rutile) pigment (Ti-Pure® R-706 by DuPont Co., Wilmington, DE) as above was further processed by induction into a fast moving stream of air in an Injector Treatment device as described above. The Injector Treator Inlet temperature was 330°C and the Outlet Temperature was 165°C. Nitrogen gas at 60 psi was used as the inductant gas to atomize the dispersant resin solution. A lower dispersant level on pigment was used in this example to demonstrate self dispersing concept. The dispersant resin solution consisted of a blend of Polymer Dispersant 1 and Tamol® 1124 which is a random acrylic aqueous dispersing polymer available from Rohm and Haas Company. The dispersant level applied to the titanium dioxide pigment was targeted at 1.0 wt% Polymer dispersant 1 and 0.3 wt% Tamol® 1124. The resultant product collected was a fine dry white powder.

Control 1 (C.1)

The control, C.1, used in this study is commercial unmilled and undispersed Ti-Pure® R-706 pigment. When directly added to paint, this provided the lowest base point for comparison for this invention.

Comparative Example 1 (C.Ex.1)

The comparative example 1, C.Ex.1, was labscale slurry using the same pigment and dispersant composition as Example 1, Injector Treatment example I.T. 1. The comparative example 1 was prepared by adding to a one quart stainless steel pot the following ingredients:

|  |  |
|---|---|
| 72.5 grams | deionized water |
| 166 grams | Polymer Dispersant 1 |
| 1.0 grams | AMP 95 (from Angus Chemicals) |
| 0.5 grams | Dehydran 1620 defoamer (from Cognis Inc.) |

The above ingredients are added in order to the stainless steel pot and mixed. Milling was performed using a Dispermat model AE5C high speed disperser, HSD, equipped with a 60 mm Cowles blade operated at 2000 rpm. Using a top loading balance 760 grams of Ti Pure R-706 grade white pigment is dispensed into a tarred paper bag. The pigment was slowly added to the stainless steel pot containing the above ingredients. After all of the pigment is added the sample was milled for 15 minutes at 2000 rpm. The fully milled slurry is removed from the mill and dispensed into a storage container.

Evaluation of Conditioned Pigments

Paint Testing in a Typical High Gloss Aqueous Architectural Paint

The paint testing was performed using a typical high gloss, aqueous, architectural paint formulation. The paints were made by making a Master Batch consisting of all paint ingredients less white pigment or white pigment slurry. The Master Batch (M.B.1) had the following composition:

| Portion 1 | Weight (gram) |
|---|---|
| Deionized Water | 312.0 |
| Propylene Glycol (Malinkrodt Baker Inc.) | 122.0 |
| Rhoplex HG-74 (Acrylic Binder from Rohm & Haas) | 2802.0 |
| Texanol (solvent from Eastman Chemical) | 171.0 |
| Proxel GXL (biocide from ICI) | 8.0 |
| Triton CF-10 (surfactant from Union Carbide) | 11.0 |
| Dehydran 1620 (defoamer from Cognis Inc.) | 13.0 |
| Premix above ingredients for 15 minutes at 1750 rpm and then add. | |

(continued)

| Portion 2 | |
| --- | --- |
| Acrysol RM-2020 NPR (from Rohm & Haas) | 32.0 |
| Premix below ingredients and add to above | |
| Portion 3 | |
| NH$_4$OH (28% solution from EM Industries) | 42.0 |
| Deionized Water | 171.0 |
| Total | 3690.0 |

The above batch size reflects 1 gallon of Master Batch and typifies amount used in paint evaluations. The Master Batch should mix for at least 30 minutes after the last ingredient is added at 1500 + or - 25 rpm. When done it is typically dispensed into a 1 gallon plastic container. Prior to use the Master Batch should be placed on a roll mill for 1 hour for adequate mixing and uniformity.

Paint testing was performed using the above typical aqueous high gloss architectural paint formulation. To demonstrate invention and stir-in capability of I.T. example pigments, they were made into paints using the following procedure.

To a pint can, 200 grams of the Master Batch 1, M.B.1, was added. Next, deionized water was added with mixing at 60 rpm. For example I.T. pigments, 18.8 grams of deionized water is added followed by 54.0 grams of example pigment. The dried and isolated, IT Pigment examples 1-3 tested were 95% TiO$_2$ pigment and 5% resin but invention is not limited to this combination. For instance, the IT Pigment Example 4, tested looked at an even lower dispersant level (1.3% resin). Mixing was performed for 10 minutes at 60 rpm using a standard mixing blade, to incorporate all ingredients and demonstrate stir in capability. All samples were equilibrated overnight to release any entrapped air prior to testing. The control, C.1 was made in the same manner, using same amount of pigment as the IT pigment examples.

The comparative example, C.E. 1 is an HSD (high speed dispersed) milled slurry containing R-706 TiO$_2$ pigment with 5% active polymer dispersant 1. Paint testing using the comparative example was done in a similar manner as the I.T. sample pigments. To a pint can 200 grams of Master Batch 1 is added. Next, 2.3 grams of deionized water followed by 70.2 grams of comparative example slurry. All samples contained the same level of pigment.

The paint properties tested included low and high shear viscosity, pH and paint gloss. Accuracy of solids and weighing of ingredients are critical since small inaccuracies can make significant differences in paint test results. The low shear paint viscosity was measured by the Stormer method using a Brookfield, Model KU-1Q viscometer. All paint samples were equilibrated to room temperature and filled to the same level on the Stormer shaft. The high shear paint viscosity were measured using a Byk Gardner, ICI Cone and Plate viscometer at 12,000 sec-1. The pH was tested using a conventional model 200 pH meter from Beckman.

The paint gloss was measured using paint drawdowns on clean black PVC panels measuring 5.5 inches wide x 11.25 inches long x 0.010 inch thick. The drawdowns were made using a Byk Gardner automated drawdown machine with a 3.5 inch wide and 0.004 inch clearance film applicator. The drawdowns were immediately placed in a drying oven for 3 hours at 100 F and 60% relative humidity. After drying the gloss measurements were made at 20 and 60 degrees using a calibrated Byk Gardner model 4606 gloss meter. Three readings were taken, one from the top, middle and bottom of each panel, and averaged.

Table 1. Paint Testing Results of Injector Treated Example Pigments, Controls and Comparative Examples.

| Sample I.D. | Stormer | ICI | pH | Gloss | |
| --- | --- | --- | --- | --- | --- |
| | Viscosity | Viscosity | | 20 | 60 |
| | (ku) | (Poise) | | | |
| Ex.1 (I.T. 1) | 63 | 0.64 | 9.5 | 50 | 81 |
| Ex.2 (I.T. 2) | 68 | 0.82 | 9.6 | 52 | 80 |
| Ex.3 (I.T. 3) | 67 | 0.85 | 9.5 | 49 | 80 |
| Ex.4 (I.T. 4) | 69 | 0.89 | 9.5 | 44 | 78 |
| Control 1, C.1 | 92 | 1.17 | 9.6 | 29 | 64 |
| C.Ex. 1 (milled slurry) | 62 | 0.62 | 9.7 | 53 | 83 |

The paint properties tested are reported in Table 1. The low shear Stormer viscosity is reported in ku or Kreb Units. All paint samples were in the 60 to 70 ku range except the control, C.1, which was higher at 92 ku and attributed to flocculated and unmilled white pigment agglomerates. The high shear viscosity results are reported in Poise units and show that example pigments made using IT procedure have lower high shear viscosity than control.

The paint gloss was the highest for the HSD milled comparative example 1,C.Ex. 1, and the unmilled control, C.1, had the poorest gloss, as expected. Gloss for paints made using I.T. invention pigments, were good but slightly lower versus paint made with fully milled Comparative Example 1 slurry which demonstrates and supports the claims of the invention. Further testing may be needed to optimize dispersant type and level for the injector treatment process, using routine experimentation. Compatibility of dispersant resin package and grade of $TiO_2$ pigment used in Injector Treatment process may also impact self dispersing performance when used with binder resins and other paint ingredients in particular enduse application. Consequently, certain applications may achieve acceptable performance while other may not depending on binder compatibility. The dispersant treatment procedure using spray drying techniques was also performed but demonstrated less promising results than the injector treatment method. The dispersant treatment procedure was also tested during micronization (fluid energy milling). In this procedure, a dispersant resin solution containing Polymer Dispersant 1 was also added during fluid energy milling using an 8 inch standard micronizer at a 3 to 1 steam to pigment ratio. The resultant product was a fine white powder that when tested in paint, yielded a grit free product with low gloss comparable to Example 4. Optimization to enhance stir-in performance of $TiO_2$ pigments in aqueous systems of this invention may include a combination of one or more of the treatment methods described.

**Claims**

1.  A process for preparing conditioned titanium dioxide pigments comprising

    (a) during pigment finishing admixing the following components to form a conditioned pigment

        (1) a crude titanium dioxide pigment material;
        (2) at least about 0.1% by weight, relative to the inorganic pigment, of one or more acrylic copolymer dispersants having at least one hydrophobic pigment adsorbing segment and at least one relatively hydrophilic stabilizing segment, wherein the pigment adsorbing segment includes at least one polymerized monomer having acid, acid salt, phosphate or amine functionality; and
        (3) an optional processing liquid in which the inorganic pigment is substantially insoluble; and

    (b) followed by isolating the conditioned inorganic pigment as dry powder.

2.  A process according to Claim 1 wherein the mixture additionally comprises

        (4) one or more processing aids; and/or
        (5) one or more surface treatment additives.

3.  A process according to Claim 1 wherein the pigment is rutile titanium dioxide Pigment.

4.  The process according to Clam 1, wherein the copolymer dispersant is an acrylic copolymer.

5.  A process according to Claim 4 wherein the acrylic copolymer dispersant contains at least one polymerized monomer having an acid, phosphate, or amine functionality in an adsorbing segment.

6.  A process according to Claim 4 wherein the acrylic copolymer is a block copolymer having at least one pigment absorbing segment and at least one stabilizing segment, wherein the pigment absorbing segment includes at least one polymerized monomer having acid, phosphate or amine functionality.

7.  A process according to Claim 6 wherein the acrylic copolymer is formed from polymerized (meth)acrylic monomers.

8.  A process according to Claim 6 wherein the acrylic polymer is prepared by group transfer polymerization techniques.

9.  A process according to Claim 6 wherein the block copolymer contains hydroxyl groups in the stabilizing segment.

10. A process according to Claim 4 wherein the acrylic copolymer is a graft copolymer having a macromonomer side chain grafted onto a polymer backbone, wherein either the backbone or the macromonomer includes at least one polymerized monomer having acid, phosphate, or amine functionality.

**11.** A process according to Claim 10 wherein the acrylic copolymer is formed from polymerized (meth)acrylic monomers.

**12.** A process according to Claim 10 wherein the acrylic copolymer is prepared by special chain transfer techniques.

**13.** A process according to Claim 10 wherein the graft copolymer contains hydroxyl groups on the backbone and/or the macromonomer.

**14.** A process according to Claim 1 wherein admixing is accomplished by spray drying.

**15.** A process according to Claim 1 wherein admixing is accomplished by micromzing.

**16.** A process according to Claim 1 wherein the admixing is accomplished by injector treating.

**17.** A pigment composition prepared according to the process of Claim 1.

**18.** A pigmented coating composition containing as pigment a pigment composition prepared according to Claim 1.

**19.** Aqueous pigment dispersions comprising a conditioned inorganic pigment prepared by the process according to Claim 1 in an aqueous liquid medium.

**20.** A process for preparing conditioned titanium dioxide pigments according to claim 1 comprising

(a) during pigment finishing following steam milling of titanium dioxide pigment, admixing the following components in a zone of turbulence in an injector treatment apparatus to form a conditioned pigment, which zone of turbulence is provided by introduction of a high-pressure gas through a concentric pipe:

(1) steam milled titanium dioxide dry pigment material;
(2) at least about 0.1% by weight, relative to the inorganic pigment, of one or more copolymer dispersants in solution; and then

(b) isolating the conditioned inorganic pigment as dry powder.

**Patentansprüche**

**1.** Verfahren zum Herstellen von konditionierten Titandioxidpigmenten, welches die folgenden Schritte umfasst:

(a) während der Endbearbeitung des Pigments, ein Beimischen der nachfolgenden Komponenten, um ein konditioniertes Pigment zu bilden:

(1) ein rohes Titandioxidpigmentmaterial;
(2) mindestens etwa 0,1 Gewichtsprozent, auf das anorganische Pigment bezogen, von einem oder von mehreren Acrylcopolymeren als Dispergiermittel, die mindestens ein hydrophobes Pigmente adsorbierendes Segment und mindestens ein relativ hydrophiles, stabilisierendes Segment aufweisen, wobei das Pigmente adsorbierende Segment mindestens ein polymerisiertes Monomer mit einer Säure-, Säuresalz-, Phosphat- oder Aminfunktionalität enthält; und
(3) eine wahlweise Verarbeitungsflüssigkeit, in welcher das anorganische Pigment im Wesentlichen unlöslich ist; und

(b) gefolgt von einem Isolieren des konditionierten, anorganischen Pigments als trockenes Pulver.

**2.** Verfahren gemäß Anspruch 1, bei dem die Mischung zusätzlich umfasst:

(4) ein oder mehrere Verarbeitungshilfsmittel; und / oder
(5) ein oder mehrere Zusatzstoffe für die Oberflächenbehandlung.

**3.** Verfahren gemäß Anspruch 1, bei dem das Pigment aus einem Rutil-Titandioxidpigment besteht.

4. Verfahren gemäß Anspruch 1, bei dem das Copolymerdispergiermittel aus einem Acrylcopolymer besteht.

5. Verfahren gemäß Anspruch 4, bei dem das Dispergiermittel aus Acrylcopolymer mindestens ein polymerisiertes Monomer mit einer Säure-, Phosphat- oder Aminfunktionalität in einem adsorbierenden Segment enthält.

6. Verfahren gemäß Anspruch 4, bei dem das Acrylcopolymer aus einem Blockcopolymer besteht, das mindestens ein Pigmente absorbierendes Segment und mindestens ein stabilisierendes Segment aufweist, wobei das die Pigmente absorbierende Segment mindestens ein polymerisiertes Monomer mit einer Säure-, Phosphat- oder Aminfunktionalität enthält.

7. Verfahren gemäß Anspruch 6, bei dem das Acrylcopolymer aus polymerisierten (Meth)acrylmonomeren hergestellt wird.

8. Verfahren gemäß Anspruch 6, bei dem das Acrylcopolymer durch Techniken der Gruppenüberfiihrungspolymerisation hergestellt wird.

9. Verfahren gemäß Anspruch 6, bei dem das Blockcopolymer Hydroxylgruppen in dem stabilisierenden Segment enthält.

10. Verfahren gemäß Anspruch 4, bei dem das Acrylcopolymer aus einem Pfropfcopolymer besteht mit einer Makromonomerseitenkette, die auf eine Polymerhauptkette gepfropft ist, wobei entweder die Hauptkette oder das Makromonomer mindestens ein polymerisiertes Monomer mit einer Säure-, Phosphat- oder Aminfunktionalität enthält.

11. Verfahren gemäß Anspruch 10, bei dem das Acrylcopolymer aus polymerisierten (Meth)acrylmonomeren hergestellt wird.

12. Verfahren gemäß Anspruch 10, bei dem das Acrylcopolymer durch spezielle Techniken der Kettenüberführung hergestellt wird.

13. Verfahren gemäß Anspruch 10, bei dem das Pfropfcopolymer Hydroxylgruppen an der Hauptkette und / oder an dem Makromonomer enthält.

14. Verfahren gemäß Anspruch 1, bei dem das Zumischen durch eine Sprühtrocknung ausgeführt wird.

15. Verfahren gemäß Anspruch 1, bei dem das Zumischen durch Mikronisieren ausgeführt wird.

16. Verfahren gemäß Anspruch 1, bei dem das Zumischen durch eine Einspritzbehandlung ausgeführt wird.

17. Pigmentzusammensetzung, welche gemäß dem Verfahren von Anspruch 1 zubereitet wird.

18. Pigmentierte Beschichtungszusammensetzung, die als Pigment eine Pigmentzusammensetzung enthält, die gemäß Anspruch 1 hergestellt worden ist.

19. Wässrige Pigmentdispersionen, die ein konditioniertes, anorganisches Pigment enthalten, welches gemäß dem Verfahren von Anspruch 1 in einem wässrigen, flüssigen Medium hergestellt worden ist.

20. Verfahren zum Herstellen von konditionierten Titandioxidpigmenten gemäß Anspruch 1, welches die folgenden Schritte umfasst:

(a) während der Endbearbeitung des Pigments, anschließend an die Dampfzerkleinerung des Titandioxidpigments, erfolgt ein Beimischen der nachfolgenden Komponenten in einer Turbulenzzone einer Einspritzbehandlungsvorrichtung, um ein konditioniertes Pigment zu bilden, wobei die Turbulenzzone bereitgestellt wird durch Einführen von Hochdruckgas durch ein konzentrisches Rohr:

(1) Dampfzerkleinertes, trockenes Pigmentmaterial aus Titandioxid;
(2) mindestens etwa 0,1 Gewichtsprozent, auf das anorganische Pigment bezogen, von einem oder von mehreren Copolymeren als Dispergiermittel in der Lösung; und dann

(b) ein Isolieren des konditionierten, anorganischen Pigments als trockenes Pulver.

**Revendications**

1.  Procédé pour la préparation de pigments de dioxyde de titane conditionnés comprenant:

    (a) durant la finition du pigment, le mélange des composants suivants pour former un pigment conditionné:

    (1) un matériau de pigment de dioxyde de titane brut;
    (2) au moins environ 0,1% en poids, relativement au pigment inorganique, d'un ou de plusieurs dispersants copolymères acryliques possédant au moins un segment adsorbant de pigment hydrophobe et au moins un segment stabilisant relativement hydrophile, où le segment adsorbant de pigment inclut au moins un monomère polymérisé avec une fonctionnalité d'acide, de sel d'acide, de phosphate ou d'amine; et
    (3) un liquide de traitement facultatif dans lequel le pigment inorganique est substantiellement insoluble; et

    (b) suivi par l'isolement du pigment inorganique conditionné sous forme d'une poudre sèche.

2.  Procédé suivant la revendication 1, dans lequel le mélange comprend en outre:

    (4) un ou plusieurs aides au traitement; et/ou
    (5) un ou plusieurs additifs de traitement de surface.

3.  Procédé suivant la revendication 1, dans lequel le pigment est un pigment de dioxyde de titane rutile.

4.  Procédé suivant la revendication 1, dans lequel le dispersant copolymère est un copolymère acrylique.

5.  Procédé suivant la revendication 4, dans lequel le dispersant copolymère acrylique contient au moins un monomère polymérisé avec une fonctionnalité d'acide, de phosphate ou d'amine dans un segment adsorbant.

6.  Procédé suivant la revendication 4, dans lequel le copolymère acrylique est un copolymère bloc possédant au moins un segment adsorbant de pigment et au moins un segment stabilisant, où le segment adsorbant de pigment inclut au moins un monomère polymérisé avec une fonctionnalité d'acide, de phosphate ou d'amine.

7.  Procédé suivant la revendication 6, dans lequel le copolymère acrylique est formé à partir de monomères (méth) acryliques polymérisés.

8.  Procédé suivant la revendication 6, dans lequel le polymère acrylique est préparé par des techniques de polymérisation par transfert de groupe.

9.  Procédé suivant la revendication 6, dans lequel le copolymère bloc contient des groupes hydroxyles dans le segment stabilisant.

10. Procédé suivant la revendication 4, dans lequel le copolymère acrylique est un copolymère greffé possédant une chaîne latérale de macromonomère greffée sur un squelette de polymère, où soit le squelette, soit le macromonomère inclut au moins un monomère polymérisé avec une fonctionnalité d'acide, de phosphate ou d'amine.

11. Procédé suivant la revendication 10, dans lequel le copolymère acrylique est formé à partir de monomères (méth) acryliques polymérisés.

12. Procédé suivant la revendication 10, dans lequel le copolymère acrylique est préparé par des techniques de transfert de chaîne spéciales.

13. Procédé suivant la revendication 10, dans lequel le copolymère greffé contient des groupes hydroxyles sur le squelette et/ou le macromonomère.

14. Procédé suivant la revendication 1, dans lequel le mélange est accompli par un séchage par pulvérisation.

**15.** Procédé suivant la revendication 1, dans lequel le mélange est accompli par une micronisation.

**16.** Procédé suivant la revendication 1, dans lequel le mélange est accompli par un traitement par injecteur.

**17.** Composition de pigment préparée suivant le procédé de la revendication 1.

**18.** Composition de revêtement pigmentée contenant comme pigment une composition de pigment préparée suivant la revendication 1.

**19.** Dispersions aqueuses de pigment comprenant un pigment inorganique conditionné préparé par le procédé suivant la revendication 1 dans un milieu liquide aqueux.

**20.** Procédé pour la préparation de pigments de dioxyde de titane conditionnés suivant la revendication 1 comprenant :

(a) durant la finition du pigment à la suite d'un broyage à la vapeur d'un pigment de dioxyde de titane, le mélange des composants suivants dans une zone de turbulence dans un appareil de traitement par injecteur pour former un pigment conditionné, laquelle zone de turbulence est fournie par l'introduction d'un gaz à haute pression à travers un tuyau concentrique :

(1) un matériau de pigment sec de dioxyde de titane broyé à la vapeur ;
(2) au moins environ 0,1% en poids, relativement au pigment inorganique, d'un ou de plusieurs dispersants copolymères en solution ; et ensuite

(b) l'isolement du pigment inorganique conditionné sous forme d'une poudre sèche.

FIG. 1

FIG. 2